# EUROPEAN PATENT SPECIFICATION

(11) **EP 4 160 125 B1**
(45) Date of publication and mention of the grant of the patent: **07.08.2024**
(21) Application number: 21841234.4
(22) Date of filing: 09.07.2021
(51) Int. Cl.: A23L 3/36, F25D 17/04, F25D 17/06, F25D 23/12, F25D 29/00, F25D 31/00, A23L 3/365

(54) **METHOD FOR CONTROLLING TEMPERATURE OF REFRIGERATOR, AND REFRIGERATOR**
VERFAHREN ZUR STEUERUNG DER TEMPERATUR EINES KÜHLSCHRANKS UND KÜHLSCHRANK
PROCÉDÉ DE RÉGULATION DE TEMPÉRATURE DE RÉFRIGÉRATEUR ET RÉFRIGÉRATEUR

(30) Priority: 13.07.2020 CN 202010670624
(43) Date of publication of application: 05.04.2023
(73) Proprietor: Qingdao Haier Refrigerator Co., Ltd., Laoshan District Qingdao Shandong 266101 (CN); Haier Smart Home Co., Ltd., Qingdao, Shandong 266101 (CN)
(72) Inventor: JI, Lisheng, Qingdao, Shandong 266101 (CN); QI, Feifei, Qingdao, Shandong 266101 (CN); CUI, Zhanpeng, Qingdao, Shandong 266101 (CN); HAN, Zhiqiang, Qingdao, Shandong 266101 (CN); LI, Peng, Qingdao, Shandong 266101 (CN); WANG, Kai, Qingdao, Shandong 266101 (CN)
(74) Representative: Ziebig Hengelhaupt Intellectual Property Attorneys Patentanwaltskanzlei PartGmbB
(86) International application number: PCT/CN2021/105500
(87) International publication number: WO 2022/012431

(56) References cited:
- CN-A- 1 174 976
- CN-A- 1 421 666
- CN-A- 102 937 364
- CN-A- 107 504 756
- CN-A- 107 763 933
- CN-A- 109 323 514
- JP-A- H04 244 569
- JP-A- S60 111 873
- KR-A- 20130 117 575
- US-A- 5 205 128
- US-A1- 2003 097 850

## Description

### FIELD OF THE INVENTION

The present invention relates to the field of refrigeration, and particularly relates to a method for controlling the temperature of a refrigerator, and a refrigerator.

### BACKGROUND OF THE INVENTION

Frozen food materials can maintain the freshness, nutritional value and original flavor to the maximum extent in the cryopreservation process. There are two main ways to preserve frozen food materials in traditional refrigerators. One is long-term low-temperature storage at -14°C to -24°C, and the other is short-term soft freezing storage at about -4°C. However, when undergoing long-term low-temperature storage, a food material needs to be thawed for a long time before it is handled, which is inconvenient for a user to handle the food material quickly; and when the food material undergoes short-term soft freezing storage, there would be problems of long time for the food material to undergo an ice crystal zone during freezing, poor preservation effect and short storage time. Therefore, there is an urgent need to provide a solution for storing a food material that enables the food material to quickly undergo the ice crystal zone and to be ready to eat.

Prior art document JPS60111873 (A) relates to a refrigerator equipped with a quench chamber for rapidly cooling refrigerated foods and a thawing chamber for thawing frozen foods uniformly and in a short time.US 2003/097850 A1 discloses a refrigerator with a multipurpose storage chamber and a control method. In the refrigerator, the flow of cool air to the multipurpose storage chamber is selectively controlled in accordance with a variety of operational modes. In order to accomplish such a cool air flow control, a refrigerating compartment fan and a damper are provided at positions above a refrigerating compartment evaporator.

CN 107 763 933 A provides a refrigeration control method for a refrigerator, wherein the control method for the refrigerator includes the steps that the temperature of a freezing air duct and each freezing sub-space is detected, so that the work state of a freezing branch air supply device, a draught fan and a compressor can be determined, and the freezing branch air supply device, the draught fan and the compressor are made to work according to the determined work state; and the temperature of a cold storage air duct and each cold storage area is detected, so that the work state of a cold storage air supply port and a cold storage branch air supply device can be determined, and the cold storage air supply port and the cold storage branch air supply device are made to work according to the determined work state.

### BRIEF DESCRIPTION OF THE INVENTION

One objective of the present invention is to overcome at least one technical defect of the prior art and to provide a method for controlling the temperature of a refrigerator, and a refrigerator that have both the advantage of enabling a food material to quickly undergo an ice crystal zone and the advantage of enabling the food material to be ready to eat.

One further objective of the present invention is to ensure that normal temperature control can be maintained in both the storage area and the thawing area of the storage compartment.

Another further objective of the present invention is to use a micro-air-duct rotary disc to meet the refrigeration requirements of the storage area and the thawing area, which can effectively reduce the switching of a solenoid valve, thus prolonging the service life of the solenoid valve.

The claimed subject-matter is defined by independent claims 1 and 5. Further preferred embodiments are defined by the dependent claims.

These and other objectives, advantages and features of the present invention will be better understood by those skilled in the art in the light of the detailed description of specific embodiments of the present invention in conjunction with the accompanying drawings below.

### BRIEF DESCRIPTION OF THE DRAWINGS

Some specific embodiments of the present invention will be described below in detail in an exemplary rather than a limiting manner with reference to the accompanying drawings. Identical reference numerals in the accompanying drawings indicate identical or similar components or parts. It should be understood by those skilled in the art that these accompanying drawings are not necessarily drawn to scale. In the accompanying drawings:
Fig. 1 is a schematic section view of a refrigerator according to an embodiment of the present invention, showing a flow path of cold airflow for refrigerating a storage area and a thawing area;
Fig. 2 is a schematic section view of an air duct cover plate according to an embodiment of the present invention;
Fig. 3 is a schematic diagram of a method for controlling the temperature of a refrigerator according to an embodiment of the present invention;
Fig. 4 is a schematic diagram of a method for controlling the temperature of a refrigerator according to another embodiment of the present invention;
Fig. 5 is a flow chart of a method for controlling the temperature of a refrigerator according to an embodiment of the present invention;
Fig. 6 is a flow chart of a method for controlling the temperature of a refrigerator according to another embodiment of the present invention; and
Fig. 7 is a flow chart of a method for controlling the temperature of a refrigerator according to yet another embodiment of the present invention.

### DETAILED DESCRIPTION

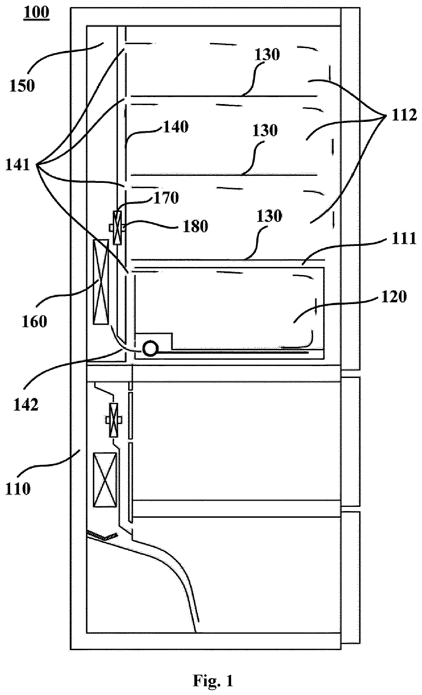

Fig. 1 is a schematic section view of a refrigerator according to an embodiment of the present invention, showing a flow path of cold airflow for refrigerating a storage area and a thawing area. Referring to Fig. 1, a refrigerator 100 includes a cabinet 110, a thawing chamber 120, a refrigeration system, a micro-air-duct rotary disc 180 and a control module.

The cabinet 110 defines a storage compartment, and the storage compartment includes one or more storage areas 112 and one thawing area 111. The thawing chamber 120 is arranged in the thawing area 111. In some embodiments, there may be a plurality of storage compartments, and in the illustrated embodiment, the cabinet 110 defines two storage compartments. Both of the storage compartments are opened forwards. In some other embodiments, the storage compartments may also be opened upwards.

In the case where the cabinet 110 defines two storage compartments, the storage compartments may include a refrigerating compartment and a freezing compartment. As known to those skilled in the art, the refrigerating compartment refers to a storage compartment where the preservation temperature of food materials is 0 to 8°C; and the freezing compartment refers to a storage compartment where the preservation temperature of the food materials is -24°C to -14°C. The thawing chamber 120 may be arranged in the refrigerating compartment, so as to reduce the impact of thawing or maintaining soft freezing temperature on the food materials preserved in the storage compartment.

The refrigeration system is configured to generate cold airflow. Specifically, the refrigeration system may include a compressor, a condenser, a throttling element and an evaporator.

The micro-air-duct rotary disc 180 is configured to make the cold airflow selectively enter the storage area 112 and the thawing chamber 120. The cold airflow may undergo heat exchange with air inside the storage area 112 or the thawing chamber 120, so as to reduce the temperature of the storage area 112 or the thawing chamber 120, thus meeting refrigeration requirements of the storage compartment and the thawing chamber 120.

Further, the refrigerator 100 may further include thermal baffles 130, which are arranged in the storage compartment and configured to separate the storage compartment into the storage area 112 and the thawing area 111. The thawing chamber 120 is arranged in the thawing area 111. In the illustrated embodiment, the thermal baffles 130 are all arranged to extend in a horizontal direction. In the embodiments of the present invention, by arranging the thermal baffles 130, the storage compartment where the thawing chamber 120 is located can be separated into a thawing area 111 and at least one storage area 112, and then the thawing chamber 120 is arranged in the thawing area 111, which can effectively isolate heat exchange between the thawing chamber 120 and the storage area 112 and reduce the refrigeration influence of the storage area 112 on the thawing chamber 120. The thawing area 111 may be arranged below the storage area 112.

In some other embodiments, the refrigerator 100 may further be provided with thermal baffles that extend in a vertical direction, and the thermal baffles extending in the horizontal direction and the thermal baffles extending in the vertical direction can be peripherally arranged on the outer side of the thawing chamber 120 in an end-to-end connection mode. Therefore, the heat exchange between the thawing chamber 120 and the storage area 112 may be further isolated, thereby ensuring the thermal insulation property of the thawing chamber 120.

The control module includes a memory and a processor. The memory stores a control program, when being executed by the processor, the control program is used for implementing the method for controlling the temperature of the refrigerator according to any one of the claims 1-4 of the present invention. The control module may be arranged on an electrical control panel of the refrigerator to facilitate installation and maintenance of the control module.

The refrigerator 100 includes a first temperature sensor and a second temperature sensor. The first temperature sensor is arranged in the storage area 112 to detect the temperature of the storage area 112. The second temperature sensor is arranged in the thawing chamber 120 to detect the temperature of the thawing chamber 120. The first temperature sensor and the second temperature sensor detect the temperature of the storage area and the temperature of the thawing chamber respectively, which is convenient to control the temperature of the storage area 112 and the temperature of the thawing chamber 120.

The refrigerator 100 further includes a heating unit. The heating unit is configured to thaw the thawing chamber 120. Specifically, the heating unit may include an electromagnetic wave generation system which is at least partially arranged in the thawing chamber 120 or communicated to the inside of the thawing chamber 120. The electromagnetic wave generation system may be configured to generate electromagnetic waves to thaw an object to be handled. The electromagnetic wave generation system may be at least partially arranged on the outer side of the cabinet 110 to avoid fluctuations in the temperature of the compartment caused by the generated heat. The outer side of the cabinet 110 herein refers to the side of the cabinet 110 exposed to ambient air, and the inner side of the cabinet 110 refers to the storage compartment.

The electromagnetic wave generation system may include an electromagnetic wave generation module, configured to generate an electromagnetic wave signal; a power supply module, electrically connected with the electromagnetic wave generation module and configured to supply electric energy to the electromagnetic wave generation module to make the electromagnetic wave generation module generate the electromagnetic wave signal; a radiating antenna, electrically connected with the electromagnetic wave generation module and configured to radiate electromagnetic waves at a corresponding frequency according to the electromagnetic wave signal to thaw the object to be handled in the thawing chamber 120; and a signal processing and measurement and control circuit, configured to detect characteristic parameters of the electromagnetic waves.

The electromagnetic wave generation module and the power supply module may be arranged on the outer side of the cabinet 110. The signal processing and measurement and control circuit may be arranged at the bottom of the thawing chamber 120. The signal processing and measurement and control circuit may be integrated on a circuit board, so as to facilitate installation and maintenance of the signal processing and measurement and control circuit.

In some embodiments, the refrigerator 100 may be an air-cooled refrigerator. Each storage compartment may be internally provided with an air duct cover plate 140 respectively, so as to separate a refrigeration air duct 150 in the inside of each storage compartment. Each refrigeration air duct 150 may be provided with an evaporator 160 and a refrigeration fan 170 respectively, so as to enable the refrigeration system to refrigerate one of the storage compartments separately. Of course, in the case where the cabinet defines a plurality of storage compartments, an evaporator 160 and a refrigeration fan 170 may also be arranged in only one of the refrigeration air ducts 150, and the refrigeration air duct 150 where the evaporator 160 is located optionally communicates with other refrigeration air ducts 150. In this embodiment, the refrigeration air duct 150 where the evaporator 160 is located optionally communicates with other refrigeration air ducts 150, thus the refrigeration system may only refrigerate the storage compartment where the evaporator 160 is located or refrigerate a plurality of storage compartments at the same time.

At least one air supply outlet 141 and an air return inlet 142 may be formed in each air duct cover plate 140, so as to circulate air in the corresponding storage compartment for refrigeration. There may be a plurality of air supply outlets 141. An air supply outlet 141 and an air return inlet 142 may be formed in the thawing chamber 120, so as to circulate air in the thawing chamber 120 for refrigeration. The air return inlet 142 may be formed below the plurality of air supply outlets 141, so as to make refrigeration more adequate.

In some other embodiments, the refrigerator 100 may also be a direct cooling refrigerator. That is, each storage compartment may be provided with an evaporator 160 and cold is transferred by means of natural convection.

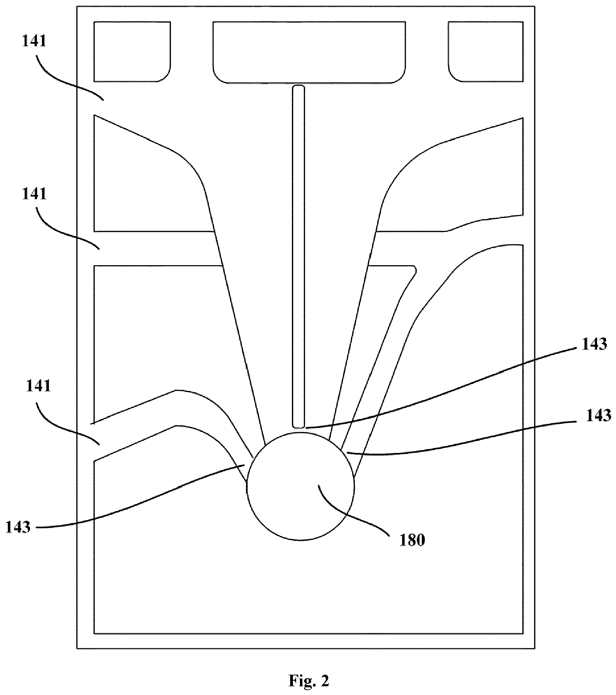

Fig. 2 is a schematic section view of the air duct cover plate 140 according to an embodiment of the present invention. Referring to Fig. 2, in some embodiments, the air duct cover plate 140 may be clamped into the rear wall of the storage compartment to from an air return portion of the refrigeration air duct 150, and the evaporator 160 may be arranged in the air return portion. The air duct cover plate 140 itself may be provided with at least one air supply portion of a compartment duct, and each air supply portion may be provided with at least one air supply outlet 141 and an air inlet 143.

The micro-air-duct rotary disc 180 may be configured to be a volute capable of containing the refrigeration fan 170. The volute is configured to be rotatable and to make its air outlet in butt joint with the air inlet 143 of one air supply portion, so as to convey cold airflow refrigerated by the evaporator 160 to the air supply portion and blow it out from the air supply outlet 141 of the air supply portion.

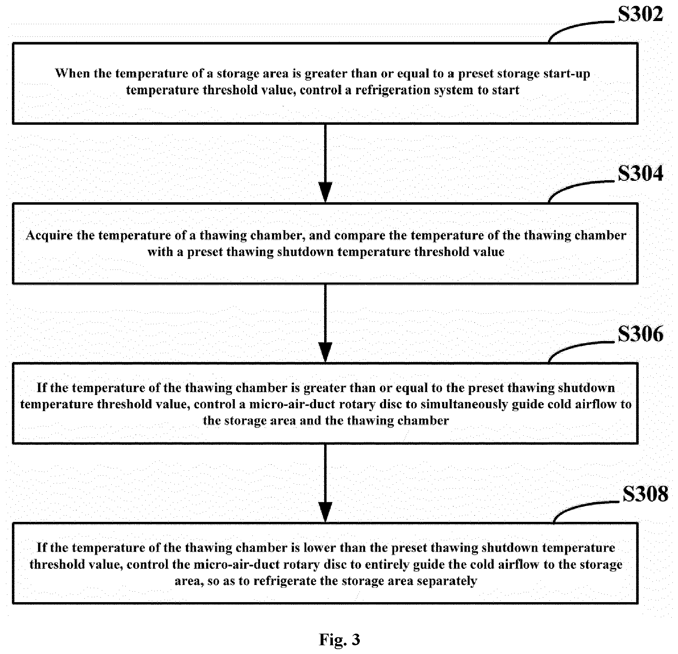

Fig. 3 is a schematic diagram of a method for controlling the temperature of a refrigerator according to an embodiment of the present invention. Referring to Fig. 3, the method for controlling the temperature of the refrigerator includes steps S302 to S308.

Step S302, when the temperature of a storage area is greater than or equal to a preset storage start-up temperature threshold value, a refrigeration system is controlled to start; and after starting, the refrigeration system generates cold airflow.

Step S304, the temperature of a thawing chamber is acquired, and the temperature of the thawing chamber is compared with a preset thawing shutdown temperature threshold value.

Step S306, if the temperature of the thawing chamber is greater than or equal to the preset thawing shutdown temperature threshold value, a micro-air-duct rotary disc is controlled to simultaneously guide the cold airflow to the storage area and the thawing chamber.

Step S308, if the temperature of the thawing chamber is lower than the preset thawing shutdown temperature threshold value, the micro-air-duct rotary disc is controlled to entirely guide the cold airflow to the storage area, so as to refrigerate the storage area separately.

The refrigeration system is started to generate the cold airflow when the temperature of the storage area is greater than or equal to the storage start-up temperature threshold value, a guiding direction of the cold airflow is determined by comparing the temperature of the thawing chamber with the preset thawing shutdown temperature threshold value, and the directional guidance of the cold airflow is completed by means of the micro-air-duct rotary disc, thereby meeting different refrigeration requirements of the storage area and the thawing chamber; and in the process of controlling the temperature of the compartment, a solenoid valve does not need to be frequently switched, thereby effectively prolonging the service life of the solenoid valve.

Considering that during refrigeration of the storage area 112 or the thawing chamber 120, the temperature of the storage area or the temperature of the thawing chamber 120 will decrease, as for step S306, after the micro-air-duct rotary disc 180 is controlled to simultaneously guide the cold airflow to the storage area 112 and the thawing chamber 120, when the temperature of the storage area 112 decreases to a preset storage shutdown temperature threshold value and the temperature of the thawing chamber 120 is still higher than the preset thawing shutdown temperature threshold value, the micro-air-duct rotary disc 180 also controlled to entirely guide the cold airflow to the thawing chamber 120, so as to refrigerate the thawing chamber 120 separately. In this case, the temperature of the thawing chamber 120 will decrease quickly, such that a food material placed in the thawing chamber 120 undergoes an ice crystal zone quickly, which is conducive to food preservation.

After the micro-air-duct rotary disc 180 is controlled to entirely guide the cold airflow to the thawing chamber 120, when the temperature of the thawing chamber 120 decreases to the preset thawing shutdown temperature threshold value, refrigeration of the thawing chamber 120 also stopped. Since the temperature of the storage area 112 decreases to the preset storage shutdown temperature threshold value firstly, refrigeration of the storage area 112 will be stopped firstly; and then, when the temperature of the thawing chamber 120 decreases to the preset thawing shutdown temperature threshold value, refrigeration of the thawing chamber 120 is stopped, so as to enable both the refrigeration requirement of the storage area 112 and the refrigeration requirement of the thawing chamber 120 to be met, thereby ensuring that normal temperature control can be maintained in both the storage area and the thawing chamber 120.

As for step S306, after the micro-air-duct rotary disc 180 is controlled to simultaneously guide the cold airflow to the storage area 112 and the thawing chamber 120, when the temperature of the thawing chamber 120 decreases to the preset thawing shutdown temperature threshold value and the temperature of the storage area 112 is still higher than the preset storage shutdown temperature threshold value, the micro-air-duct rotary disc 180 also controlled to entirely guide the cold airflow to the storage area 112, so as to refrigerate the storage area 112 separately.

After the micro-air-duct rotary disc 180 is controlled to entirely guide the cold airflow to the storage area 112, when the temperature of the storage area 112 decreases to the preset storage area shutdown temperature threshold value, refrigeration of the storage area 112 is also stopped. Since the temperature of the thawing chamber 120 decreases to the preset thawing shutdown temperature threshold value firstly, refrigeration of the thawing chamber 120 will be stopped firstly,; and then, when the temperature of the storage area 112 decreases to the preset storage shutdown temperature threshold value, refrigeration of the storage area 112 is stopped, so as to enable both the refrigeration requirement of the storage area and the refrigeration requirement of the thawing chamber 120 to be met, thereby ensuring that normal temperature control can be maintained in both the storage area 112 and the thawing chamber 120

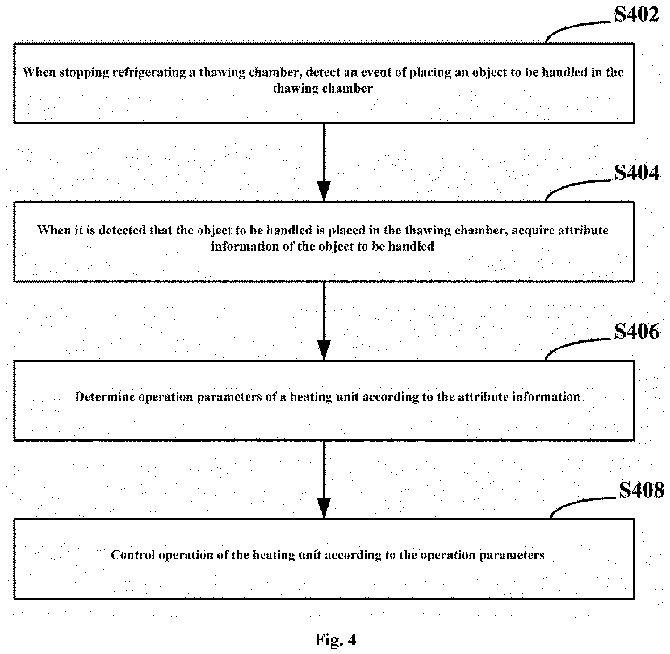

In order to facilitate thawing of frozen food materials, the refrigerator 100 further includes a heating unit. The heating unit is configured to thaw the thawing chamber 120. Fig. 4 is a flow chart of a method for controlling the temperature of a refrigerator according to the present invention. Referring to Fig. 4, the method for controlling the temperature of the refrigerator also includes steps S402 to S408.

Step S402, when refrigeration of the thawing chamber 120 is stopped, an event of placing an object to be handled in the thawing chamber 120 is detected. The object to be handled generally refers to a food material/food that needs to be placed into the refrigerator for freezing, thawing or refrigerating.

Step S404, when it is detected that the object to be handled is placed in the thawing chamber 120, attribute information of the object to be handled is acquired. The attribute information may include a type of the object to be handled, a boundary dimension of the object to be handled, and/or the temperature of the object to be handled. The temperature of the object to be handled includes a surface temperature and/or a central temperature of the object to be handled

Step S406, operation parameters of the heating unit are determined according to the attribute information. The operation parameters include but are not limited to starting time, stopping time and power of the heating unit.

Step S408, operation of the heating unit is controlled according to the operation parameters.

When the object to be handled is placed in the thawing chamber 120, the attribute information of the object to be handled is acquired, then the operation parameters of the heating unit are determined according to the attribute information, and the operation of the heating unit is controlled based on the operation parameters, such that a better thawing effect can be achieved and the problem of degradation of food quality caused by thawing can be reduced.

In some embodiments, when the attribute information includes the temperature of the object to be handled, step S406 may include: a temperature difference between the temperature of the object to be handled and a thawing chamber shutdown temperature threshold value is calculated; and the starting time of the heating unit is determined according to the temperature difference. In this embodiment, the starting time of the heating unit is determined according to the temperature difference between the temperature of the object to be handled and the thawing chamber shutdown temperature threshold value, which makes the thawing time more reasonable and reduces the problem of degradation of food quality due to excessive thawing.

A first preset temperature threshold value and a second preset temperature threshold value can be determined according to thawing experiments of the thawing chamber 120. The second preset temperature threshold value may be set to 0°C, so as to make the thawing chamber 120 in a minus temperature thawing state during thawing. Of course, the first preset temperature threshold value and the second preset temperature threshold value may also be set to a certain threshold value range, respectively.

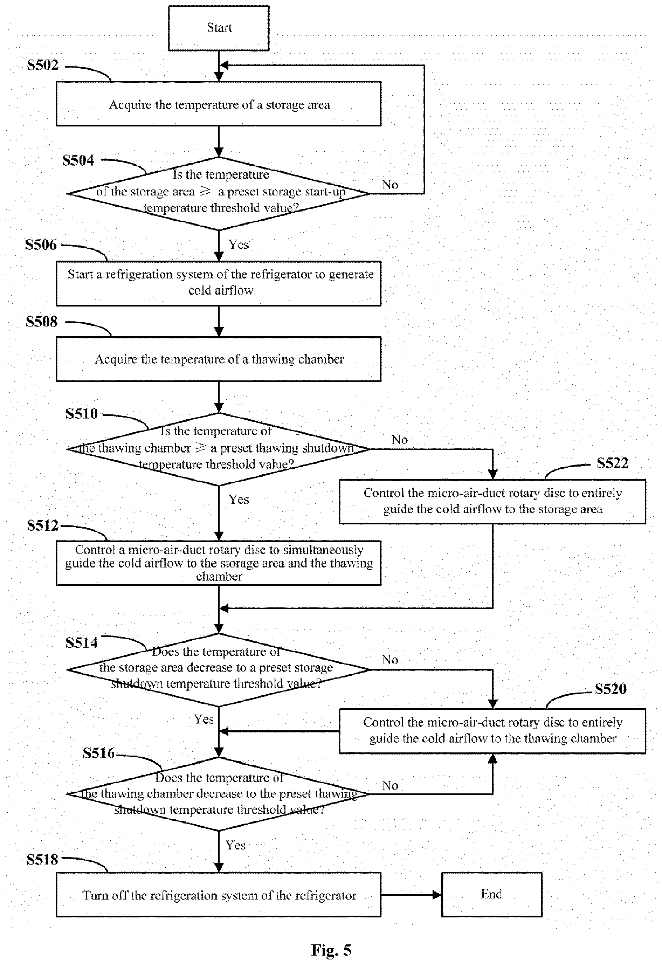

Fig. 5 is a flow chart of a method for controlling the temperature of a refrigerator according to an embodiment of the present invention. Referring to Fig. 5, in this embodiment, the method for controlling the temperature of the refrigerator may include steps S502 to S524.

Step S502, the temperature of a storage area is acquired.

Step S504, whether the temperature of the storage area is greater than or equal to a preset storage start-up temperature threshold value is determined; if yes, step S506 is performed; and if no, step S502 continues to be performed.

Step S506, a refrigeration system of the refrigerator is started to generate cold airflow.

Step S508, the temperature of a thawing chamber is acquired.

Step S510, whether the temperature of the thawing chamber is greater than or equal to a preset thawing shutdown temperature threshold value is determined; if yes, step S512 is performed; and if no, step S522 is performed.

Step S512, a micro-air-duct rotary disc is controlled to simultaneously guide the cold airflow to a refrigerating compartment and the thawing chamber.

Step S514, whether the temperature of the storage area decreases to a preset storage shutdown temperature threshold value is determined; if yes, step S516 is performed; and if no, step S520 is performed.

Step S516, whether the temperature of the thawing chamber decreases to the preset thawing shutdown temperature threshold value is determined; if yes, step S518 is performed; and if no, step S520 is performed.

Step S518, the refrigeration system of the refrigerator is turned off.

Step S520, the micro-air-duct rotary disc is controlled to entirely guide the cold airflow to the thawing chamber.

Step S522, the micro-air-duct rotary disc is controlled to entirely guide the cold airflow to the storage area.

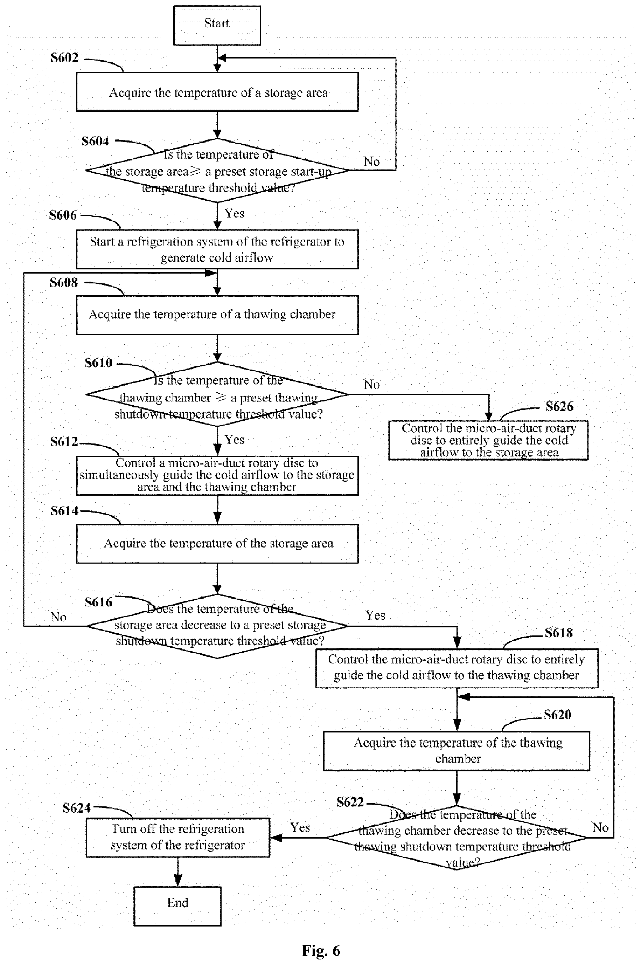

Fig. 6 is a flow chart of a method for controlling the temperature of a refrigerator according to another embodiment of the present invention. Referring to Fig. 6, in this embodiment, the method for controlling the temperature of the refrigerator may include steps S602 to S626.

Step S602, the temperature of a storage area is acquired.

Step S604, whether the temperature of the storage area is greater than or equal to a preset storage start-up temperature threshold value is determined; if yes, step S606 is performed; and if no, step S602 continues to be performed.

Step S606, a refrigeration system of the refrigerator is started to generate cold airflow.

Step S608, the temperature of a thawing chamber is acquired.

Step S610, whether the temperature of the thawing chamber is greater than or equal to a preset thawing shutdown temperature threshold value is determined; if yes, step S612 is performed; and if no, step S626 is performed.

Step S612, a micro-air-duct rotary disc is controlled to simultaneously guide the cold airflow to the storage area and the thawing chamber.

Step S614, the temperature of the storage area is acquired.

Step S616, whether the temperature of the storage area decreases to a preset storage shutdown temperature threshold value is determined; if no, it returns to step S608; and if yes, step S618 is performed.

Step S618, the micro-air-duct rotary disc is controlled to entirely guide the cold airflow to the thawing chamber.

Step S620, the temperature of the thawing chamber is acquired.

Step S622, whether the temperature of the thawing chamber decreases to the preset thawing shutdown temperature threshold value is determined; if yes, it returns to step S620; and if no, step S624 is performed.

Step S624, the refrigeration system of the refrigerator is turned off.

Step S626, the micro-air-duct rotary disc is controlled to entirely guide the cold airflow to the storage area.

In this embodiment, since the temperature of the storage area 112 decreases to the preset storage shutdown temperature threshold value firstly, refrigeration of the storage area 112 will be stopped firstly, and the cold airflow is entirely guided to the thawing chamber 120; and then, when the temperature of the thawing chamber 120 decreases to the preset thawing shutdown temperature threshold value, the refrigeration system is turned off, and thus refrigeration of the thawing chamber 120 is stopped, so as to enable both the refrigeration requirement of the storage area 112 and the refrigeration requirement of the thawing chamber 120 to be met, which not only makes the food material in the thawing chamber 120 undergo an ice crystal zone quickly, but also ensures that normal temperature control can be maintained in both the storage area and the thawing area 120.

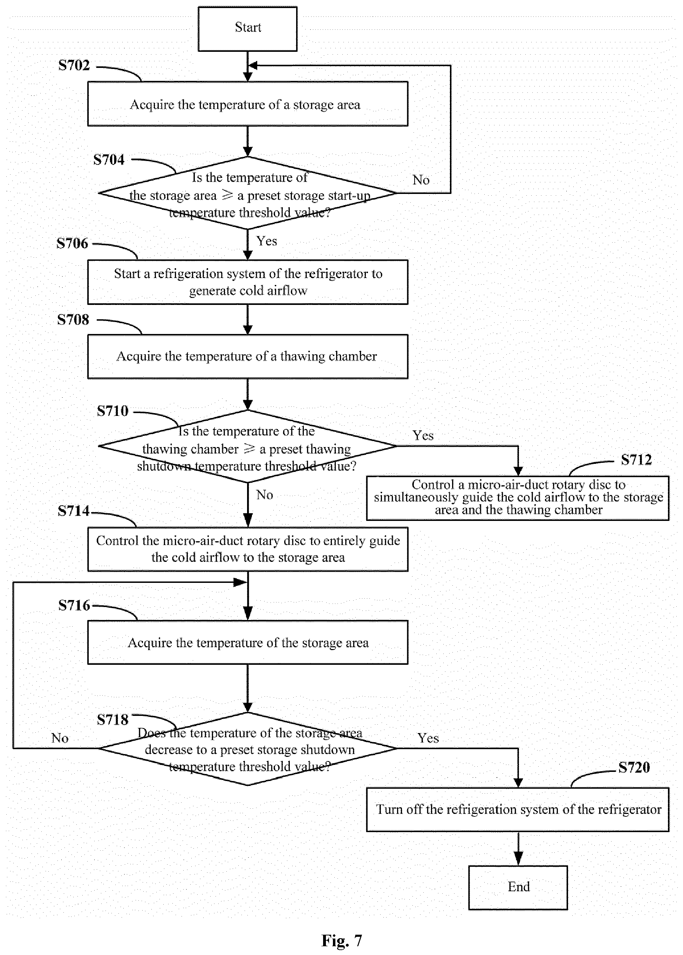

Fig. 7 is a flow chart of a method for controlling the temperature of a refrigerator according to yet another embodiment of the present invention. Referring to Fig. 7, in this embodiment, the method for controlling the temperature of the refrigerator may include steps S702 to S720.

Step S702, the temperature of a storage area is acquired.

Step S704, whether the temperature of the storage area is greater than or equal to a preset storage start-up temperature threshold value is determined; if yes, step S706 is performed; and if no, step S702 continues to be performed.

Step S706, a refrigeration system of the refrigerator is started to generate cold airflow.

Step S708, the temperature of a thawing chamber is acquired.

Step S710, whether the temperature of the thawing chamber is greater than or equal to a preset thawing shutdown temperature threshold value is determined; if yes, step S712 is performed; and if no, step S714 is performed.

Step S712, a micro-air-duct rotary disc is controlled to simultaneously guide the cold airflow to the storage area and the thawing chamber.

Step S714, the micro-air-duct rotary disc is controlled to entirely guide the cold airflow to the storage area.

Step S716, the temperature of the storage area is acquired.

Step S718, whether the temperature of the storage area decreases to a preset storage shutdown temperature threshold value is determined; if no, it returns to step S716; and if yes, step S720 is performed.

Step S720, the refrigeration system of the refrigerator is turned off.

In this embodiment, since the temperature of the thawing chamber 120 decreases to the preset thawing shutdown temperature threshold value firstly, refrigeration of the thawing chamber 120 will be stopped firstly, and the cold airflow is entirely guided to the storage area 112; and then, when the temperature of the storage area 112 decreases to the preset storage shutdown temperature threshold value, the refrigeration system is turned off, such that refrigeration of the storage area 112 is stopped, so as to enable both the refrigeration requirement of the storage area 112 and the refrigeration requirement of the thawing chamber 120 to be met, thereby ensuring that normal temperature control can be maintained in both the storage area 112 and the thawing chamber 120. It should be noted that, one or more examples of the embodiments of the present invention are shown in the accompanying drawings. Each of the examples is provided by way of explanation of the present invention and is not a limitation of the present invention. The scope of the present invention is defined by the appended claims.

The present invention provides the method for controlling the temperature of the refrigerator, and the refrigerator. In the method for controlling the temperature of the refrigerator provided in the present invention, the refrigeration system is started to generate the cold airflow when the temperature of the storage area is greater than or equal to the preset storage start-up temperature threshold value, the guiding direction of the cold airflow is determined by comparing the temperature of the thawing chamber 120 with the preset thawing shutdown temperature threshold value, and the directional guidance of the cold airflow is completed by means of the micro-air-duct rotary disc, thereby meeting different refrigeration requirements of the storage area 112 and the thawing chamber 120; and in the refrigeration process, not only can the use of a solenoid valve be reduced, but also the switching times of the solenoid valve can be effectively reduced, thereby prolonging the service life of the solenoid valve.

Further, in the embodiments of the present invention, the starting time of the heating unit can also be determined according to the temperature difference between the temperature of the object to be handled and the preset thawing shutdown temperature threshold value, so as to reasonably control the thawing time and avoid the degradation of food quality due to excessive thawing.

Further, in the embodiments of the present invention, the thermal baffles 130 are also arranged in the refrigerator, and the storage compartment where the thawing chamber 120 is located can be separated into the thawing area 111 and the storage area 112, and thus the thawing chamber 120 is arranged in the thawing area, which can effectively isolate the heat exchange between the thawing chamber 120 and the storage area 112, thereby reducing the refrigeration influence of the storage area 112 on the thawing chamber 120.

## Claims

1. A method for controlling the temperature of a refrigerator (100), wherein the refrigerator (100) comprises a cabinet (110), in which is defined a storage compartment, the storage compartment comprising a storage area (112) and a thawing area (Ill); a thawing chamber (120), arranged in the thawing area (Ill); a refrigeration system, configured to generate cold airflow; and a micro-air-duct rotary disc (180), configured to make the cold airflow selectively enter the storage area (112) and the thawing chamber (120); and the method comprises:
controlling, when the temperature of the storage area (112) is greater than or equal to a preset storage start-up temperature threshold value, the refrigeration system to start;
acquiring the temperature of the thawing chamber (120), and comparing the temperature of the thawing chamber (120) with a preset thawing shutdown temperature threshold value;
controlling, if the temperature of the thawing chamber (120) is greater than or equal to the preset thawing shutdown temperature threshold value, the micro-air-duct rotary disc (180) to simultaneously guide the cold airflow to the storage area (112) and the thawing chamber (120); and
controlling, if the temperature of the thawing chamber (120) is lower than the preset thawing shutdown temperature threshold value, the micro-air-duct rotary disc (180) to entirely guide the cold airflow to the storage area (112), so as to refrigerate the storage area (112) separately, wherein after the step of controlling the micro-air-duct rotary disc (180) to simultaneously guide the cold airflow to the storage area (112) and the thawing chamber (120), the method further comprises:
controlling, when the temperature of the storage area (112) decreases to a preset storage shutdown temperature threshold value and the temperature of the thawing chamber (120) is still higher than the preset thawing shutdown temperature threshold value, the micro-air-duct rotary disc (180) to entirely guide the cold airflow to the thawing chamber (120); and
the step of controlling, if the temperature of the thawing chamber (120) is lower than the preset thawing shutdown temperature threshold value, the micro-air-duct rotary disc (180) to entirely guide the cold airflow to the storage area (112) comprises:
controlling, when the temperature of the thawing chamber (120) decreases to the preset thawing shutdown temperature threshold value and the temperature of the storage area (112) is still higher than the preset storage shutdown temperature threshold value, the micro-air-duct rotary disc (180) to entirely guide the cold airflow to the storage area (112), wherein
after the step of controlling the micro-air-duct rotary disc (180) to entirely guide the cold airflow to the thawing chamber (120), the method further comprises: stopping refrigerating the thawing chamber (120) when the temperature of the thawing chamber (120) decreases to the preset thawing shutdown temperature threshold value; and
after the step of controlling the micro-air-duct rotary disc (180) to entirely guide the cold airflow to the storage area (112), the method further comprises: stopping refrigerating the storage area (112) when the temperature of the storage area (112) decreases to the preset storage shutdown temperature threshold value, wherein the refrigerator (100) further comprises a heating unit, configured to thaw the thawing chamber (120), and the method further comprises:
detecting, when stopping refrigerating the thawing chamber (120), an event of placing an object to be handled in the thawing chamber (120);
acquiring, when it is detected that the object to be handled is placed in the thawing chamber (120), attribute information of the object to be handled; determining operation parameters of the heating unit according to the attribute information; and
controlling operation of the heating unit according to the operation parameters.

2. The method for controlling the temperature of the refrigerator (100) according to claim 1, wherein the attribute information comprises any one of the following items:
a type of the object to be handled, a boundary dimension of the object to be handled, and the temperature of the object to be handled.

3. The method for controlling the temperature of the refrigerator (100) according to claim 2, wherein when the attribute information comprises the temperature of the object to be handled, the step of determining the operation parameters of the heating unit according to the attribute information comprises:
calculating a temperature difference between the temperature of the object to be handled and a thawing chamber (120) shutdown temperature threshold value; and
determining starting time of the heating unit according to the temperature difference.

4. The method for controlling the temperature of the refrigerator (100) according to claim 3, wherein
the temperature of the object to be handled comprises a surface temperature and/or a central temperature of the object to be handled.

5. A refrigerator (100), comprising:
a cabinet (110), in which is defined at least one storage compartment;
the storage compartment comprising a storage area (112) and a thawing area (111);
a thawing chamber (120) arranged in the thawing area (111);
a refrigeration system, configured to generate cold airflow during working;
a micro-air-duct rotary disc (180), configured to make the cold airflow selectively enter the at least one storage compartment and the thawing chamber (120); further comprising:
a first temperature sensor, arranged in the storage area (112) and configured to detect the temperature of the storage area (112); and
a second temperature sensor, arranged in the thawing chamber (120) and configured to detect the temperature of the thawing area (111), and
a heating unit, configured to thaw the thawing chamber (120),
a detecting unit for detecting an event of placing an object to be handled in the thawing chamber (120);
an acquiring unit for acquiring, attribute information of the object to be handled;
a control module, comprising a memory and a processor, wherein the memory stores a control program, and when being executed by the processor, the control program is used for implementing the method for controlling the temperature of the refrigerator (100) according to any one of claims 1-4.

6. The refrigerator (100) according to claim 5, further comprising:
a thermal baffle, arranged in the storage compartment and configured to separate the storage compartment into a storage area (112) and a thawing area (Ill).

## Patentansprüche

1. Verfahren zum Steuern der Temperatur eines Kühlschranks (100), wobei der Kühlschrank (100) umfasst: einen Schrank (110), in dem ein Lagerfach definiert ist, wobei das Lagerfach einen Lagerbereich (112) und einen Auftaubereich (111) umfasst; eine Auftaukammer (120), die in dem Auftaubereich (111) angeordnet ist; ein Kühlsystem, das so konfiguriert ist, dass es einen kalten Luftstrom erzeugt; und eine Mikroluftkanal-Drehscheibe (180), die so konfiguriert ist, dass sie den kalten Luftstrom selektiv in den Lagerbereich (112) und die Auftaukammer (120) eintreten lässt; und wobei das Verfahren umfasst:
Steuern des Startens des Kühlsystems, wenn die Temperatur des Lagerbereichs (112) größer oder gleich einem voreingestellten Schwellenwert für die Lager-Einstalttemperatur ist;
Erfassen der Temperatur der Auftaukammer (120) und Vergleichen der Temperatur der Auftaukammer (120) mit einem voreingestellten Schwellenwert für die Auftau-Abschalttemperatur,
Steuern der Mikroluftkanal-Drehscheibe (180), wenn die Temperatur der Auftaukammer (120) größer als oder gleich dem voreingestellten Schwellenwert für die Auftau-Abschalttemperatur ist, um gleichzeitig den kalten Luftstrom zu dem Lagerbereich (112) und der Auftaukammer (120) zu leiten; und
Steuern der Mikroluftkanal-Drehscheibe (180), wenn die Temperatur der Auftaukammer (120) niedriger als dem voreingestellten Schwellenwert für die Auftau-Abschalttemperatur ist, um den kalten Luftstrom vollständig zu dem Lagerbereich (112) zu leiten, um den Lagerbereich (112) separat zu kühlen, wobei nach dem Schritt des Steuerns der Mikroluftkanal-Drehscheibe (180), um den kalten Luftstrom gleichzeitig zu dem Lagerbereich (112) und der Auftaukammer (120) zu leiten, das Verfahren ferner umfasst:
Steuern, wenn die Temperatur des Lagerbereichs (112) auf einen voreingestellten Schwellenwert für die Lager-Abschalttemperatur sinkt und die Temperatur der Auftaukammer (120) immer noch höher als dem voreingestellten Schwellenwert für die Auftau-Abschalttemperatur ist, der Mikroluftkanal-Drehscheibe (180), um den kalten Luftstrom vollständig zur Auftaukammer (120) zu leiten; und
der Schritt des Steuerns der Mikroluftkanal-Drehscheibe (180), wenn die Temperatur der Auftaukammer (120) niedriger als dem voreingestellten Schwellenwert für die Auftau-Abschalttemperatur ist, um vollständig den kalten Luftstrom zu dem Lagerbereich (112) zu leiten, umfasst:
Steuern, wenn die Temperatur der Auftaukammer (120) auf einen voreingestellten Schwellenwert für die Auftau-Abschalttemperatur sinkt und die Temperatur des Lagerbereichs (112) immer noch höher als dem voreingestellten Schwellenwert für die Lager-Abschalttemperatur ist, der Mikroluftkanal-Drehscheibe (180), um den kalten Luftstrom vollständig zu dem Lagerbereich (112) zu leiten; und
nach dem Schritt des Steuerns der Mikroluftkanal-Drehscheibe (180), um den kalten Luftstrom vollständig zur Auftaukammer (120) zu leiten, umfasst das Verfahren ferner: Unterbrechen der Kühlung der Auftaukammer (120), wenn die Temperatur der Auftaukammer (120) auf den voreingestellten Schwellenwert für die Auftau-Abschalttemperatur sinkt; und
nach dem Schritt des Steuerns der Mikroluftkanal-Drehscheibe (180), um den kalten Luftstrom vollständig zum Lagerbereich (112) zu leiten, umfasst das Verfahren ferner: Unterbrechen der Kühlung des Lagerbereichs (112), wenn die Temperatur der Lagerbereichs (112) auf den voreingestellten Schwellenwert für die Lager-Abschalttemperatur sinkt; wobei der Kühlschrank (100) ferner eine Heizeinheit umfasst, die so konfiguriert ist, dass sie die Auftaukammer (120) auftaut, und das Verfahren ferner umfasst:
Erfassen eines Ereignisses, bei dem ein zu behandelnder Gegenstand in die Auftaukammer (120) gelegt wird, wenn das Kühlen der Auftaukammer (120) gestoppt wird;
Erfassen von Attributinformationen des zu behandelnden Gegenstands, wenn erfasst wird, dass der zu behandelnde Gegenstand in der Auftaukammer (120) gelegt ist; Bestimmen von Betriebsparametern der Heizeinheit gemäß den Attributinformationen; und
Steuern des Betriebs der Heizeinheit gemäß den Betriebsparametern.

2. Verfahren zum Steuern der Temperatur eines Kühlschranks (100) nach Anspruch 1, wobei die Attributinformation eines der folgenden Elemente umfasst:
eine Art des zu behandelnden Gegenstands, eine Grenzabmessung des zu behandelnden Gegenstands und die Temperatur des zu behandelnden Gegenstands.

3. Verfahren zum Steuern der Temperatur eines Kühlschranks (100) nach Anspruch 2, wobei die Attributinformation die Temperatur des zu behandelnden Gegenstands umfasst, wobei der Schritt des Bestimmens von Betriebsparametern der Heizeinheit gemäß den Attributinformationen umfasst:
Berechnen einer Temperaturdifferenz zwischen der Temperatur des zu behandelnden Gegenstands und einem Schwellenwert für die Abschalttemperatur der Auftaukammer (120); und
Bestimmen des Einschaltzeitpunkts der Heizeinheit in Abhängigkeit von der Temperaturdifferenz.

4. Verfahren zum Steuern der Temperatur des Kühlschranks (100) nach Anspruch 3, wobei
die Temperatur des zu bearbeitenden Gegenstands eine Oberflächentemperatur und/oder eine zentrale Temperatur des zu bearbeitenden Gegenstands umfasst.

5. Kühlschrank (100), umfassend:
einen Schrank (110), in dem mindestens ein Lagerfach definiert ist; wobei das Lagerfach einen Lagerbereich (112) und einen Auftaubereich (111) umfasst;
eine Auftaukammer (120), die in dem Auftaubereich (111) angeordnet ist;
ein Kühlsystem, das so konfiguriert ist, dass es während der Arbeit einen kalten Luftstrom erzeugt;
eine Mikroluftkanal-Drehscheibe (180), die so konfiguriert ist, dass der kalte Luftstrom selektiv in das mindestens eine Lagerfach und die Auftaukammer (120) eintritt; ferner umfassend:
einen ersten Temperatursensor, der in dem Lagerbereich (112) angeordnet und so konfiguriert ist, dass er die Temperatur des Lagerbereichs (112) erfasst; und
einen zweiten Temperatursensor, der in der Auftaukammer (120) angeordnet und so konfiguriert ist, dass er die Temperatur des Auftaubereichs (111) erfasst, und
eine Heizeinheit, die zum Auftauen der Auftaukammer (120) konfiguriert ist,
eine Erfassungseinheit zum Erfassen eines Ereignisses, bei dem ein zu behandelnder Gegenstand in die Auftaukammer (120) gelegt wird;
ein Steuermodul, das einen Speicher und einen Prozessor umfasst, wobei der Speicher ein Steuerprogramm speichert und das Steuerprogramm, wenn es von dem Prozessor ausgeführt wird, zum Implementieren des Verfahrens zum Steuern der Temperatur des Kühlschranks (100) gemäß einem der Ansprüche 1 bis 4 verwendet wird.

6. Kühlschrank (100) nach Anspruch 5, weiterhin umfassend:
ein thermisches Leitblech, das in dem Lagerfach angeordnet und so konfiguriert ist, dass es das Lagerfach in einen Lagerbereich (112) und einen Auftaubereich (111) trennt.

## Revendications

1. Procédé de régulation de la température d'un réfrigérateur (100), le réfrigérateur (100) comprend une armoire (110), dans laquelle est défini un compartiment de stockage, le compartiment de stockage comprenant une zone de stockage (112) et une zone de décongélation (111) ; une chambre de décongélation (120), disposée dans la zone de décongélation (111) ; un système de réfrigération, configuré pour générer un flux d'air froid ; et un disque rotatif à micro-conduits d'air (180), configuré pour diriger sélectivement le flux d'air froid vers la zone de stockage (112) et la chambre de décongélation (120) ; et le procédé comprend :
la commande du démarrage du système de réfrigération lorsque la température de la zone de stockage (112) est supérieure ou égale à un seuil de température de démarrage prédéfini pour le stockage ;
l'acquisition de la température de la chambre de décongélation (120) et la comparaison de cette température avec un seuil de température d'arrêt de décongélation prédéfini ;
la commande du disque rotatif à micro-conduits d'air (180) pour guider simultanément le flux d'air froid vers la zone de stockage (112) et la chambre de décongélation (120) si la température de la chambre de décongélation (120) est supérieure ou égale au seuil de température d'arrêt de décongélation prédéfini ; et
la commande du disque rotatif à micro-conduits d'air (180) pour guider entièrement le flux d'air froid vers la zone de stockage (112) afin de réfrigérer séparément la zone de stockage (112) si la température de la chambre de décongélation (120) est inférieure au seuil de température d'arrêt de décongélation prédéfini, après l'étape de commande du disque rotatif à micro-conduits d'air (180) pour guider simultanément le flux d'air froid vers la zone de stockage (112) et la chambre de décongélation (120), le procédé comprend en outre :
la commande du disque rotatif à micro-conduits d'air (180) pour guider entièrement le flux d'air froid vers la chambre de décongélation (120) lorsque la température de la zone de stockage (112) diminue jusqu'à un seuil de température d'arrêt de stockage prédéfini et que la température de la chambre de décongélation (120) est toujours supérieure au seuil de température d'arrêt de décongélation prédéfini ; et
l'étape de commande du disque rotatif à micro-conduits d'air (180) pour guider entièrement le flux d'air froid vers la zone de stockage (112) si la température de la chambre de décongélation (120) est inférieure au seuil de température d'arrêt de décongélation prédéfini, comprenant :
la commande du disque rotatif à micro-conduits d'air (180) pour guider entièrement le flux d'air froid vers la zone de stockage (112) lorsque la température de la chambre de décongélation (120) diminue jusqu'au seuil de température d'arrêt de décongélation prédéfini et que la température de la zone de stockage (112) est toujours supérieure au seuil de température d'arrêt de stockage prédéfini, dans lequel
après l'étape de commande du disque rotatif à micro-conduits d'air (180) pour guider entièrement le flux d'air froid vers la chambre de décongélation (120), le procédé comprend en outre : l'arrêt de la réfrigération de la chambre de décongélation (120) lorsque la température de la chambre de décongélation (120) diminue jusqu'au seuil de température d'arrêt de décongélation prédéfini ; et
après l'étape de commande du disque rotatif à micro-conduits d'air (180) pour guider entièrement le flux d'air froid vers la zone de stockage (112), le procédé comprend en outre : l'arrêt de la réfrigération de la zone de stockage (112) lorsque la température de la zone de stockage (112) diminue jusqu'au seuil de température d'arrêt de stockage prédéfini, dans lequel le réfrigérateur (100) comprend en outre une unité de chauffage, configurée pour décongeler la chambre de décongélation (120), le procédé comprenant en outre :
la détection, lors de l'arrêt de la réfrigération de la chambre de décongélation (120), d'un événement de placement d'un objet à traiter dans la chambre de décongélation (120) ;
l'acquisition, lorsqu'il est détecté que l'objet à traiter est placé dans la chambre de décongélation (120), des informations relatives aux attributs de l'objet à traiter ; la détermination des paramètres de fonctionnement de l'unité de chauffage en fonction des informations relatives aux attributs ; et
la commande du fonctionnement de l'unité de chauffage en fonction des paramètres de fonctionnement.

2. Procédé de régulation de la température du réfrigérateur (100) selon la revendication 1, dans lequel les informations relatives aux attributs comprennent l'un quelconque des éléments suivants :
un type d'objet à traiter, une dimension caractéristique de l'objet à traiter, et la température de l'objet à traiter.

3. Procédé de régulation de la température du réfrigérateur (100) selon la revendication 2, dans lequel lorsque les informations relatives aux attributs comprennent la température de l'objet à traiter, l'étape de détermination des paramètres de fonctionnement de l'unité de chauffage en fonction des informations relatives aux attributs comprend :
le calcul d'une différence de température entre la température de l'objet à traiter et un seuil de température d'arrêt de la chambre de décongélation (120) ; et
la détermination du temps de démarrage de l'unité de chauffage en fonction de la différence de température.

4. Procédé de régulation de la température du réfrigérateur (100) selon la revendication 3, dans lequel
la température de l'objet à traiter comprend une température de surface et/ou une température centrale de l'objet à traiter.

5. Réfrigérateur (100), comprenant :
une armoire (110), dans laquelle est défini au moins un compartiment de stockage ; le compartiment de stockage comprenant une zone de stockage (112) et une zone de décongélation (111) ;
une chambre de décongélation (120) disposée dans la zone de décongélation (111) ;
un système de réfrigération, configuré pour générer un flux d'air froid en fonctionnement ;
un disque rotatif à micro-conduits d'air (180), configuré pour diriger sélectivement le flux d'air froid vers le ou les compartiments de stockage et la chambre de décongélation (120) ; comprenant également :
un premier capteur de température, disposé dans la zone de stockage (112) et configuré pour détecter la température de la zone de stockage (112) ; et
un second capteur de température, disposé dans la chambre de décongélation (120) et configuré pour détecter la température de la zone de décongélation (111), et
une unité de chauffage, configurée pour décongeler la chambre de décongélation (120),
une unité de détection pour détecter un événement de placement d'un objet à traiter dans la chambre de décongélation (120) ;
un module de commande, comprenant une mémoire et un processeur, la mémoire stockant un programme de commande, et le programme de commande étant utilisé pour mettre en oeuvre le procédé de régulation de la température du réfrigérateur (100) selon l'une quelconque des revendications 1 à 4 lorsqu'il est exécuté par le processeur.

6. Réfrigérateur (100) selon la revendication 5, comprenant en outre :
une chicane thermique, disposée dans le compartiment de stockage et configurée pour séparer le compartiment de stockage en une zone de stockage (112) et une zone de décongélation (111).
